**Europäisches Patentamt**

**European Patent Office**

**Office européen des brevets**

(19)

(11) Veröffentlichungsnummer: **0 198 204 B1**

(12) **EUROPÄISCHE PATENTSCHRIFT**

(45) Veröffentlichungstag der Patentschrift: **14.08.91**

(51) Int. Cl.5: **H02M 7/5387**

(21) Anmeldenummer: **86103065.8**

(22) Anmeldetag: **07.03.86**

(54) **Verfahren und Vorrichtung zum Wechselrichten.**

(30) Priorität: **16.04.85 DE 3513584**

(43) Veröffentlichungstag der Anmeldung:
**22.10.86 Patentblatt 86/43**

(45) Bekanntmachung des Hinweises auf die
Patenterteilung:
**14.08.91 Patentblatt 91/33**

(84) Benannte Vertragsstaaten:
**DE FR GB IT NL SE**

(56) Entgegenhaltungen:
**EP-A- 0 082 029**
**US-A- 4 370 702**
**US-A- 4 447 867**

(73) Patentinhaber: **SEW-EURODRIVE GmbH & Co.**
**Industriestrasse 42**
**W-7520 Bruchsal(DE)**

(72) Erfinder: **Trümpler, Walter, Dipl.-Ing.**
**Kleinbachstrasse 21**
**W-7500 Karlsruhe 41(DE)**
Erfinder: **Zimmermann, Ottokar, Dipl.-Ing.**
**Richard-Wagner-Strasse 13**
**W-7520 Bruchsal(DE)**

(74) Vertreter: **Dr.-Ing. Hans Lichti Dipl.-Ing. Heiner**
**Lichti Dipl.-Phys. Dr. Jost Lempert**
**Postfach 41 07 60 Durlacher Strasse 31**
**W-7500 Karlsruhe 41(DE)**

## Beschreibung

Die Erfindung betrifft ein Verfahren und eine Vorrichtung zum Frequenz-Wechselrichten zur Regelung von Drehstrommotoren, wobei Rechteckspannungsimpulse an einem Ausgang durch Öffnen und Schließen elektronischer Schalter mit Hilfe von Schalterstellungskonfigurationen erzeugt werden, die mit einem Mikroprozessor aus einem Speicher abgerufen werden.

Aus der US-PS 4 370 702 ist eine Vorrichtung zum Wechselrichten einer Gleichspannung in eine Wechselspannung einer fest vorgegebenen Frequenz von 400 Hz bekannt. Dabei werden Rechteckimpulse mit Hilfe elektronischer Schalter erzeugt. Die dazu benötigten Schaltereinstellungen sind in einem EPROM abgespeichert. Ein Mikroprozessor ruft programmabhängig die jeweiligen Einstellungen aus dem EPROM ab und bildet einen Rechteckimpuls, dem vier Trabanten zugeordnet sind, um den an sich gewünschten sinusförmigen Verlauf des Ausgangssignals mit möglichst wenig Oberwellenanteil nachzubilden.

Die Vorrichtung kann bei Drehstromausgängen immer nur einen Ausgang innerhalb eines Bereichen von + 30° um den Nulldurchgang des Ausgangssignals herum schalten. Die einzige vorgesehene Variation besteht darin, daß die positiven oder negativen Trabanten um eine festgelegte Zeitdauer verkürzt oder verlängert werden, um einen Gleichstromanteil für jeden Ausgang getrennt zu vermeiden.

Um Drehstrommotoren zu steuern muß das Ausgangssignal jedoch in der Frequenz variiert werden können. Dabei ist gerade beim Anfahren des Motors eine möglichst gute sinusförmige Näherung des Ausgangssignales im Hinblick auf Rundlaufverhalten und Geräuschentwicklung notwendig.

Der Erfindung liegt die Aufgabe zugrunde, ein Verfahren anzugeben, mittels dessen in einfacher Weise ohne übergroßen technischen Aufwand eine optimale Steuerung eines Wechselrichters zur Regelung von Drehstrommotoren erreicht wird, und eine Vorrichtung zur Durchführung des Verfahrens zu schaffen.

Erfindungsgemäß wird die genannte Aufgabe zunächst dadurch gelöst, daß wiederholt in gewünschter Reihenfolge vorgegebene Kombinationen von Schalterstellungskonfigurationen und einer zugehörigen Anzahl fester Zeitschritte (Takte) unveränderter Schalterstellungen jeweils aus dem Speicher abgerufen werden, wobei eine Folge von Kombinationen ein Pulsmuster für zumindest eine Halbperiode einer approximierten Sinusspannung bildet, und daß Anzahlen fester Zeitschritte ohne Änderung der zugehörigen Schalterstellungen abgezählt werden. Eine Einrichtung zum Wechselrichten ist gekennzeichnet durch einen Zähler, und dadurch, daß der Mikroprozessor zum Abrufen von Schalterstellungskonfiguration und Anzahl der zugehörigen Zeitschritte aus dem Speicher und zum Einstellen der Konfiguration der Schalter und zum Setzen des Zählers verwendbar ist.

Erfindungsgemäß werden also nicht für jeden Zeitpunkt eines Taktgebers die Zustände der drei Phasen beispielsweise eines Dreiphasenstromes abgespeichert und aufgerufen. Dies würde einerseits einen hochgezüchteten und damit empfindlichen Mikroprozessor erfordern, der in der hier in Rede stehenden Umgebung von Leistungselektronik, wie den Leistungstransistoren als elektronischen Schaltern im Wechselrichter gefährdet wäre, so daß Ausfälle zu befürchten wären. Darüberhinaus würde auch ein solcher Prozessor in Grenzbereichen nicht die erforderliche Schnelligkeit des Arbeitens aufweisen. Demgegenüber sieht die Erfindung vor, daß nicht zu jedem Augenblick, d.h. zu jedem Taktzeitpunkt ein zugehöriger Zustand der drei Phasen abgespeichert ist und abgerufen wird, sondern daß in der gewünschten Reihenfolge die unterschiedlichen aufeinanderfolgenden Zustände der Schalterstellungskonfigurationen zusammen mit der Anzahl der zugehörigen Takte, über die die jeweilige Schalterstellungskonfiguration aufrechterhalten werden soll, abgespeichert ist und abgerufen wird. Hierdurch muß der Mikroprozessor nur zum Zeitpunkt der Änderung einer Schalterstellungskonfiguration tätig werden, indem er die neue Schalterstellung mit der zugehörigen Anzahl von Zeitschritten abruft, im folgenden auch als Taktzahl bezeichnet, die Änderung der Schalterstellungskonfiguration veranlaßt und einen Zähler setzt, der dann vom Taktgenerator getaktet bis zu dem vorgegebenen Endpunkt zählt. Nach Ablauf der Taktanzahl wird der Mikroprozessor mittels eines Interrupts dazu veranlaßt, die nächste Schalterstellungskonfigurationzusammen mit der zugehörigen Taktzahl abzurufen usw. Während des Aufrechterhaltens einer Schalterstellungskonfiguration und also des Zählens des Zählers über die vorgegebenen Taktzahlen, ist der Prozessor zur Erledigung anderer Aufgaben frei, wie zum Feststellen und Ausgeben von Frequenz oder Strom über eine Display-Anzeige, der gesamten Überwachung der Leistungs- und der Steuerelektronik, hinsichtlich Temperatur etc. Durch Variation der Taktfrequenz läßt sich leicht die Frequenz des Ausgangssignals verändern.

Durch die erfindungsgemäße Ausgestaltung ist es beispielsweise bei einer gewünschten relativ hohen Auflösung möglich, einen Zeitraster pro Periode der Ausgangsspannung von etwa 250 - in einer konkreten Ausgestaltung 252 - Takten vorzusehen und damit im Rahmen dieses Zeitrasters eine Sinus-bewertete gepulste Ausgangsspannung zu gewährleisten, die auch bei niedrigen Drehzahlen mit so hinreichender Genauigkeit an den gewünschten Sinus-Verlauf angepaßt ist,

um so den Oberwellenanteil zu reduzieren und den gewünschten Rundlauf sowie die gewünschte Geräuschreduzierung zu erreichen, ohne übermäßige Schwungmassen bei dem angetriebenen Motor vorzusehen. Durch die vorgenannte erfindungsgemäße Ausbildung des Verfahrens, wird insbesondere eine einfache Möglichkeit dahingehend geschaffen, daß die Dauer und Anzahl der Takte einer Periode veränderbar ist. Dementsprechend ist eine Einrichtung vorgesehen, die bei Änderung der Ausgangsfrequenz des Wechselrichters in Abhängigkeit derselben eine bestimmte Abfolge von verschiedenen Folgen von Schalterstellungskombinationen und zugehörigen Taktzahlen aus dem Speicher abruft. Hierdurch können nun die Anzahl der Sinus-bewerteten Impulse pro Halbperiode in Abhängigkeit von der Frequenz bzw. der Drehzahl des angeschlossenen Motors dahingehend optimiert werden, daß einerseits Rundlauf und geringe Geräusche gewährt sind, andererseits zwischen dem Umstellen der Schaltstellungskombination der elektronischen Schalter bei der oben erläuterten Vorgehensweise genügend Zeit für den Mikroprozessor verbleibt, die erwähnten anderen Aufgaben in der Zwischenzeit auszuführen. Die Steuerung erfolgt dabei beispielsweise beim Anlaufen des Motors und Erhöhung der Frequenz bzw. Drehzahl derart, daß zunächst ein Rechteckspannungsmuster mit einer Vielzahl von Trabanten zu einem zentralen Rechteckspannungsimpuls abgerufen und in der oben erläuterten Weise die elektronischen Schaltstellungen verändert werden. Mit Erhöhung der Frequenz wird zunächst die Taktzahl pro Zeiteinheit erhöht, die Dauer der einzelnen Impulse verlängert und deren "Abstand" in einer Halbperiode verkürzt. Wenn die Zeit zwischen den durch den Zähler ausgelösten Interrupts zu kurz wird, also der Mikroprozessor zu schnell neue Schaltstellungskombinationen abrufen und durchführen muß, als daß er noch seine weiteren oben erwähnten Aufgaben erfüllen kann, so erfolgt unter möglichst weitgehender Beibehaltung der Sinusbewertung ein Übergang auf eine Abfolge von Schaltstellungskombinationen mit einer geringeren Anzahl von "länger dauernden" Trabanten (und entsprechend längeren Zwischenräumen) wobei dies im Hinblick auf Gleichlauf und Geräuschverhalten unproblematisch ist, da die Frequenz dann schon so hoch ist, daß die Reduzierung der Trabanten keinen nachteiligen Einfluß mehr hat. Diese Abfolge von Erhöhung der Taktzahl pro Zeiteinheit und Umschalten zwischen unterschiedlichen vorgesehenen Folgen von Schalterstellungskombination mit Rechteckspannung unterschiedlicher Trabantenzahl pro Halbperiode, also verschiedener Auflösungsmuster des gewünschten Sinusverlaufs über unterschiedliche hohe Auflösungen, wird dann bis zur gewünschten bzw. zur höchsten Drehzahl fortgesetzt. In der Regel ist so die Erzeugung eines dreiphasigen Drehfeldes in der Größenordnung von 3 bis 100 Hz problemlos zu erreichen. Die erfindungsgemäße Ausgestaltung erlaubt aber in einzelnen Fällen auch eine Mittelfrequenzanwendung bei Spindel-Antrieben mit einer Frequenz bis ca. 500 Hz.

Während eine betreffende Schalterstellungskombination und die zungehörige Taktzahl, über die die Schalterstellungskombination aufrechterhalten wird, in einem Speicher wie einem ROM, EPROM etc. auf verschiedenen, gegebenenfalls sequentiell hintereinander auszulesenden Speicherplätzen, also in zwei Worten, abgespeichert und abgerufen werden kann, siecht eine bevorzugte Ausgestaltung der Erfindung vor, daß sowohl eine Schalterstellungskombination als auch die zugehörige Taktzahl in einem einzigen Wort (Byte) und damit auf einem einzigen Speicherplatz des Speichers abgespeichert wird. Dies ist bei den vorstehend angegebenen Werten ohne weiteres möglich. Bei einem dreiphasigen Drehfeld sind beispielsweise 6 elektronische Schalter und zwar in jedem Zweig zwei erforderlich, die Komplementär geschaltet sind, wenn also der Schalter geschlossen ist, ist der andere geöffnet. Insgesamt müssen daher die zwei Schalterstellungen von drei Schaltern kodiert werden, so daß für die Schalterstellung drei **B**its eines 8-**B**it-Wortes zu reservieren sind. Die verbleibende Anzahl von 5 **B**its erlaubt die Kodierung von 32 Takten, die im allgemeinen für die Aufrechterhaltung einer Schalterstellungskombination vollauf ausreichen. Durch diese erfindungsgemäße Ausgestaltung wird die Speicherökonomie des erfindungsgemäßen Verfahrens weiter erhöht. Während **beispielsweise** bei Einzelabspeicherung der Schalterstellungskombinationzu einer Taktzahl von ca. 500 pro Periode eine entsprechende Anzahl von Speicherplätzen erforderlich ist, wird diese im Rahmen des erfindungsgemäßen Verfahrens wesentlich reduziert. Bei vorstehend genannter Ausgestaltung sind bei beispielsweise zwei Trabanten insgesamt nur etwa 30 Speicherplätze notwendig, so daß sich eine Reduzierung von einem Faktor 16 ergibt.

Weitere Vorteile und Merkmale der Erfindung ergeben sich aus den Ansprüchen und aus der nachfolgenden Beschreibung, in der ein Ausführungsbeispiel des erfindungsgemäßen Verfahrens und der Vorrichtung unter Bezugnahme auf die Zeichnung im einzelnen erläutert ist. Dabei zeigt bzw. zeigen:

Fig.1    ein schematisches (Ersatz-Schaltbild) eines mittels des erfindungsgemäßen Verfahrens gesteuerten Wechselrichters für Drehstrom zusammen mit der Last (Motor-Wicklung), a) ab dem Zeitpunkt $t_1$, b) ab dem Zeitpunkt $t_2$ der Fig. 3;

Fig.2 ein Blockschaltbild der wesentlichen Teile der erfindungsgemäßen Vorrichtung; und

Fig.3 eine Darstellung zu einem einfachen Verfahrensablauf, die

a. die idealen Sinus-Kurven an den einzelnen Lastwiderständen darstellt;

b. die Sinus-bewertete gepulste Ausgangsspannung für die Zweige mit einem Hauptimpuls von zwei Trabanten rein qualitativ zeigt;

c. die Zeitpunkte des Umschaltens der Schalterstellungskombinationen angibt.

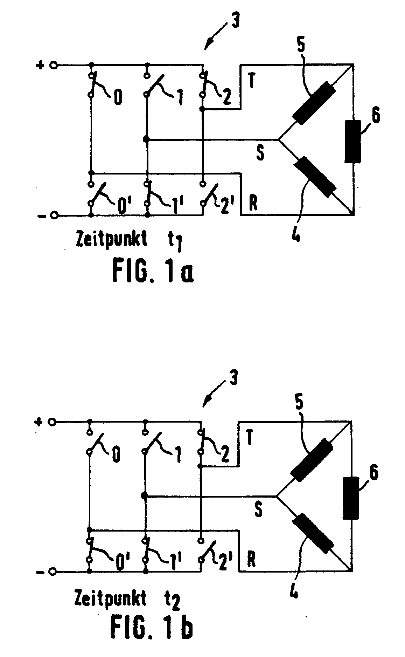

Figur 1 zeigt ein schematisches Ersatzschaltbild für einen Wechselrichter für Drehstrom, der die drei Ausgänge T,S,R hat, au denen im dargestellten Ausführungsbeispiel die dreisträngige Wicklung, 4, 5, 6 des Ständers oder Läufers in einer Dreieckschaltung verkettet ist.

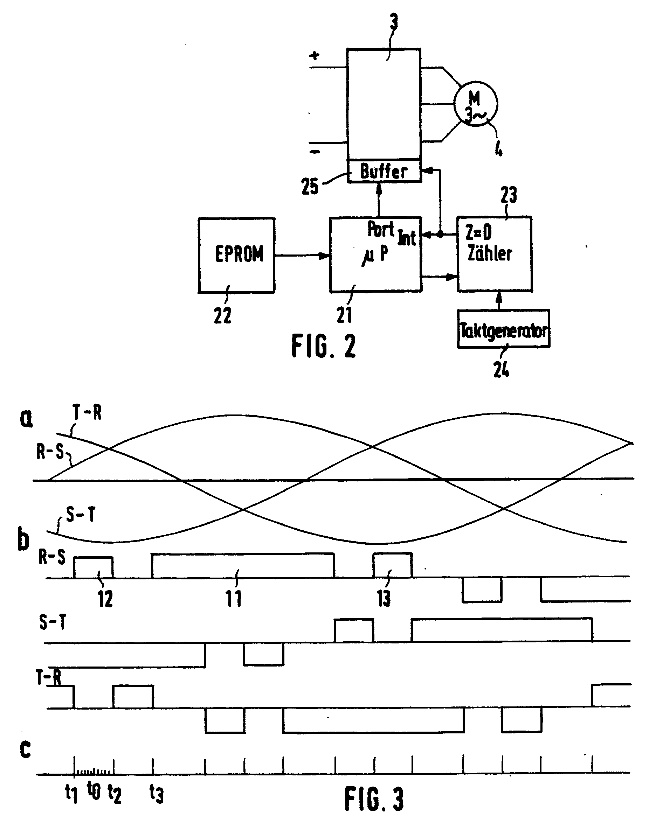

Damit der Motor weitgehend ruhig und gleichmäßig läuft, müßte er in idealer Weise mit der jeweils um 120° versetzten Sinus-Spannung entsprechend der Figur 3 beaufschlagt sein; dies gilt insbesondere bei langsamen Lauf, also niedrigen Frequenzen, während bei Schnellauf aufgrund der Massen des Motors und der hierdurch bedingten Trägheit, Abweichungen der beaufschlagenden Spannung bzw. des Stromes von der Sinus-Form des Rundverhaltens des Motors mit steigender Frequenz immer weniger beeinflussen. Der Wechselrichter 3 der Erfindung legt aber an die Zweige R-S, F-T, T-R Rechteckimpulse an.

Der Wechselrichter 3 ist Teil eines statischen Umrichters, der weiter nicht dargestellt ist, aber zunächst einen an das Wechselstromversorgungsnetz anschließbaren Gleichrichter und mindestens einen zwischen diesem und dem in der Figur 1 dargestellten Wechselrichter angeordneten Gleichstromzwischenkreis vorzugsweise mit gleitender Zwischenkreisspannung aufweist, dessen Ausgänge als Eingang "+" und "-" in der Figur 1 dargestellt sind. "+" und "-" -Eingang des Wechselrichters sind in bekannter Weise durch mit elektronischen Schaltern 0,0',1,1', 2,2' versehenen Verbindungsleitungen verbunden, wobei jeweils zwischen einem Schalterpaar 0,0' bzw. 1,1' bzw. 2,2' die Ausgangsleitungen R,S,T des Wechselrichters abzweigen, die zum Verbraucher, hier Drehstrommotor, geführt sind. Die dargestellten "Schalter" 0,0' etc. sind elektronische Schalter in der Form von Transistoren etc. Die Schaltweise ist dabei so, daß von einem Schalterpaar 0,0' etc. jeweils ein Schalter geöffnet und der andere geschlossen ist, lediglich im Umschaltzeitpunkt sind beide kurzzeitig geöffnet. Wenn beispielsweise die Schalter 0 und 2 geschlossen (und damit 0' und 2' geöffnet sind) und der Schalter 1 geöffnet (und damit 1' geschlossen ist - entsprechend der zum Zeitpunkt $t_1$ einsetzenden in Figur 1 dargestellten Schaltkombination -, so liegt über R-S positive Spannung, über S-T negative Spannung und über T-R keine Spannung an.

Die Schalterstellungskombination der Figur 1 wird beispielsweise zum Zeitpunkt $t_1$ (Figur 3) eingeschaltet. wobei gleichzeitig die Anzahl der durch einen Takt-generator erzeugten Takte vorgegeben ist, über die dieser Schalterkombinationszustand aufrechterhalten werden soll. Im dargestellten Ausführungsbeispiel sind dies lediglich beispielhaft 12 Takte, die in der Figur 3c angedeutet sind. Im Zeitpunkt $t_2$ wird eine Schalterkombination im dargestellten Ausführungsbeispiel für die gleiche Anzahl von Takten eingestellt, bei der über R-S kein Spannungsabfall gegeben ist, über S-T eine negative und über T-R positive Spannung anliegen soll, so daß dementsprechend die Schalter 0 und 1 geöffnet sind (und die komplementären entsprechend geschlossen) und der Schalter 2 geschlossen (und damit 2' geöffnet) ist. Dieser Schalterkombinationszustand wird über die gleiche Anzahl von Takten aufrechterhalten und zum Zeitpunkt $t_3$ wird der Schalter 0 wieder geöffnet, also die Schalterstellungskombination der Figur 1 wieder hergestellt, diesmal aber für eine größere Anzahl von Takten, im dargestellten Ausführungsbeispiel 16 Takte etc. Wesentlich beim erfindungsgemäßen Verfahren ist, daß nicht zu jede Zeittaktpunkt jeweils eine bestimmte vorgegebene, gespeicherte Schalterstellungskombination individuell abgerufen wird, sondern daß lediglich zu den Zeitpunkten der Änderung der Schalterstellungskombination, $t_1$, $t_2$, $t_3$, etc. in der Figur 3, die entsprechende neue Schalterstellungskombination zusammen mit der Anzahl der gewünschten Takte, über die sie aufrechterhalten werden soll, abgerufen und lediglich durch Abzählen der gegebenen Takte aufrechterhalten wird, bis dann in entsprechender Weise eine weitere Schalterstellungskombination zusammen mit der Anzahl der Takte, über die sie aufrechterhalten werden soll, abgerufen, eingestellt und entsprechend abgezählt wird.

Während im dargestellten zur Veranschaulichung vereinfachten Ausführungsbeispiel jede Halbwelle durch einen Rechteck-Hauptimpuls 11 und zwei Trabanten 12, 13 angenähert wird, ist es, wie schon gesagt wurde, einerseits möglich, insbesondere bei relativ hohen Frequenzen die Halbwelle nur durch einen Rechteckimpuls geeigneter Breite darzustellen. Bei niedriger Frequenz ist es sinnvoll und leicht möglich, eine Darstellung zu wählen, bei der zu jedem Rechteck-Hauptimpuls mehr als zwei Trabanten, also 4, 6, etc. Trabanten zugeordnet sind; dies gilt insbesondere für niedrige Frequenzen, um so die ideale Sinus-Form durch Rechteckimpulse möglichst genau anzunähern und störende Oberwellen (die durch die Annäherung mittels Rechteckimpulsen bedingt) weitgehend zu reduzieren. Ein wesentlicher Aspekt der Erfindung liegt darin, bei niedrigeren Frequenzen jede Sinus-Halbwelle durch einen Hauptimpuls und ihn zugeordnete mehrere Trabanten entsprechend den Trabanten 12, 13 darzustellen und insbesondere bei geeigneten Frequenzen von einer Darstellung mit einer bestimmten Anzahl von Trabanten zu einer anderen Darstellung mit einer anderen Anzahl von Trabanten, überzugehen, zu einem bestimmten Zeitpunkt also die Trabantenzahl um 2 zu erhöhen (wenn die Frequenz reduziert wird) bzw. zu erniedrigen (wenn die Frequenz erhöht wird). Das Abrufen der verschiedenen Schalterkombinationen und der Takte, über die sie aufrechterhalten werden, das Schalten der elektronischen Schalter (Transistoren) und das Setzen eines Zählers geschieht vorzugsweise mittels eines Mikroprozessors. Ein Blockschaltbild für eine entsprechende Vorrichtung zur Durchführung des erfindungsgemäßen Verfahrens ist in der Figur 2 dargestellt. 3 bezeichnet den Wechselrichter und 4 den Drehstrommotor. Es ist weiterhin der erwähnte Mikroprozessor 21, ein Speicher in Form eines EPROMS 22, ein Zähler 23 sowie ein Taktgenerator 24 vorgesehen. Im dargestellten Ausführungsbeispiel besteht der Taktgenerator 24 für den Zähler 23 aus einem variablen Frequenzoszillator, wie einem VCO, der eine kontinuierliche Frequenzänderung ermöglicht. Der Mikroprozessor setzt den Zähler, der dann entsprechend der Takte des Taktgenerators 24 entweder von einer gesetzten Zahl auf 0 herunter oder aber bis zu einer vorgegebenen Zahl hochzählt. Es könnte auch ein Taktgenerator vorgesehen sein, der aus einem Hochfrequenzoszillator (Quarz-Oszillator) und beispielsweise umschaltbare digitale Teiler besteht.

Grundsätzlich können die Schalterstellungskombinationen und die Anzahl der Takte, über die eine solche aufrechterhalten werden in herkömmlicher, ansich bekannter Weise im Speicher (EPROM) gespeichert sein. Bevorzugterweise sind aber sowohl die Schalterstellungskombination als auch die zugehörige Taktzahl in einem Wort (Byte) zusammengefaßt und belegen derart nur einen Speicherplatz. Die Schalterstellungskombination beansprucht drei Bits eines Bytes bei einem Drah- oder Dreiphasenstrom, für die Angabe der Stellung der Schalter 0,1 und 2 (auf oder zu) da die Schalter 0', 1', 2' eine komplementäre Stellung zu den Schaltern 0,1, 2 haben. Die verbleibenden 5 Bits können zur Angabe und Speicherung der Dauer der Schalterstellung bzw. der Taktanzahl, über die eine bestimmte Schalterstellung aufrechterhalten wird, verwendet werden, womit maximal 32 Takte angegeben werden können, was in der Regel völlig ausreichend ist; gegebenenfalls können auch in zwei Speichern hintereinander die gleichen Schalterkombinationen enthalten sein, wenn die Taktanzahl 32 überschritten wird.

Wenn der externe Taktzähler 23 auf 0 steht, wird durch ein Interrupt eine am Port des Mikroprozessors anstehende Schaltstellungskombinationsanweisung in einem Buffer 25 des Wechselrichters übernommen und gleichzeitig der Taktzähler 23 auf den zugehörigen Taktwert gesetzt. Die in den Buffer 25 übernommene Anweisung, steht damit am Wechselrichter 3 an und bestimmt während der durch den gesetzten Taktwert bestimmten Dauer ihres Anstehens die aktuellen Schalterstellungen des Wechselrichters. Der Mikroprozessor 21 kann sogleich eine weitere Kombination mit Taktzahl aus dem EPROM 22 abrufen, wobei er allerdings prüft, ob ein die "Position" der Schalterstellungskombination innerhalb einer Periode des Wechselrichters angebender Schalterkombinationszähler auf Null steht. Wenn dies der Fall ist, beginnt eine neue Periode, der Schalterkombinationszähler wird auf den der Anzahl der verschiedenen Kombinationen innerhalb der Periode entsprechenden Wert gesetzt und ein "Zeiger" auf das erste Byte der entsprechenden Periode bzw. der Adresszähler gesetzt. Auf jeden Fall wird das jeweils abgerufene Byte in Schalterkombination und Taktzahl getrennt und die Schalterkombination auf den Port ausgegeben. Weiter werden der Schalterkombinationszähler dekrementiert und der Zeiger für das folgende jeweils abzurufende Byte das Laufen der Periode bzw. das Adressregister inkrementiert. Der Mikroprozessor kann dann zunächst andere Aufgaben durchführen, er geht zurück ins Hauptprogramm bis durch ein erneutes Interrupt aufgrund Anlangen des Taktzählers 23 bei 0 der o.a. Vorgang wiederholt wird.

Für eine Periode ist immer die gleiche Taktzahl, in einem bevorzugten praktischen Beispiel 252, notwenig, um sie abzuarbeiten. Dabei ist für jedes Muster die Spannungszeitfläche unabhängig von der Anzahl der Trabanten gleich groß, so daß beim Wechsel von einem Muster zu einem anderen zu einem bestimmten Zeitpunkt beim Hoch - oder Herunterfahren des Motors keine systembedingten Spannungssprünge auftreten. Der Mikroprozessor gewährleistet insbesondere präzise Umschaltung zu bestimmten Punkten innerhalb der Periode. In der freien Zeit zwischen dem Abrufen der Schalterstellungskombination aus dem EPROM, also in der Zeit während der Zähler bei einer einmal eingestellten Kombination zählt, kann, wie gesagt, der Mikroprozessor andere Aufgaben erledigen, so die Ausgabe von interessierenden Daten, wie Frequenz, Stromstärke oder dergleichen über eine Display-Anzeige steuern, eine Temperaturüberwachung sowie eine Überwachung der Steuersignale auf minimale und maximale Pegel vornehmen. Weiterhin kann er für Drehzahl-Soll-Ist-Überwachung beispielsweise beim Blockieren des Motors in Folge Überlast eingesetzt werden.

## Patentansprüche

1. Verfahren zum Frequenz Wechselrichten zur Regelung von Drehstrommotoren, wobei Rechteckspannungsimpulse an einem Ausgang durch Öffnen und Schließen elektronischer Schalter mit Hilfe von Schalterstellungskonfigurationen erzeugt werden, die mit einem Mikroprozessor aus einem Speicher abgerufen werden, dadurch gekennzeichnet, daß wiederholt in gewünschter Reihenfolge vorgegebene und gespeicherte Kombinationen von Schalterstellungskonfigurationen und deren zugehörige Anzahl fester Zeitschritte (Takte) unveränderter Schalterstellungen jeweils zusammen aus dem Speicher (22) abgerufen werden, wobei eine Folge von Kombinationen ein Pulsmuster für zumindest eine Halbperiode einer approximierten Sinusspannung bildet, und daß Anzahlen fester Zeitschritte ohne Änderung der zugehörigen Schalterstellungen abgezählt werden.

2. Verfahren nach Anspruch 1, dadurch gekennzeichnet, daß die Dauer und Anzahl von Schalterstellungskonfigurationen während einer Periode veränderbar sind.

3. Verfahren nach Anspruch 2, dadurch gekennzeichnet, daß Dauer und Anzahl der Rechteckspannungsimpulse in Abhängigkeit von der eingestellten Ausgangsfrequenz veränderbar sind.

4. Verfahren nach einem der vorangehenden Ansprüche, dadurch gekennzeichnet, daß Schalterstellungskonfigurationen und zugehörige Zeitschrittanzahlen als 8-Bit-Wort (Byte) kodiert sind und abgerufen werden.

5. Vorrichtung zur Ausführung des Verfahrens nach Anspruch 1 mit einem Mikroprozessor, einem Speicher und elektronischen Schaltern zum Wechselrichten zur Regelung von Drehstrommotoren, wobei Rechteckspannungsimpulse an einem Ausgang durch Öffnen und Schließen der elektronischen Schalter mit Hilfe von Schalterstellungskonfigurationen erzeugt werden, die mit dem Mikroprozessor aus dem Speicher abgerufen werden, gekennzeichnet durch einen Zähler (23) und dadurch, daß der Mikroprozessor (21) zum Abrufen von Schalterstellungskonfiguration und Anzahl der zugehörigen Zeitschritte aus dem Speicher (22) und zum Einstellen der Konfiguration der Schalter (3) und zum Setzen des Zählers (23) verwendbar ist.

6. Vorrichtung nach Anspruch 5, dadurch gekennzeichnet, daß Schalterstellungskonfiguration und zugehörige Zeitschrittzahl auf zwei aufeinanderfolgenden Speicherplätzen des Speichers (22) gespeichert sind.

7. Vorrichtung nach Anspruch 5, dadurch gekennzeichnet, daß Schalterstellungskonfiguration und zugehörige Zeitschrittzahl in Form eines Wortes auf einem Speicherplatz des Speichers (22) gespeichert sind.

8. Vorrichtung nach einem der Ansprüche 5 bis 7, dadurch gekennzeichnet, daß der Speicher (22) ein EPROM ist.

9. Vorrichtung nach einem der Ansprüche 5 bis 8, dadurch gekennzeichnet, daß bei Änderung der Ausgangsfrequenz des Wechselrichters (3) in Abhängigkeit derselben eine bestimmte Abfolge von verschiedenen Folgen von Schalterstellungskonfigurationen und zugehörigen Zeitschriten aus dem Speicher (22) durch den Mikroprozessor (21) abrufbar ist.

## Claims

1. Method for frequency inversion for regulating three-phase motors, in which square-wave voltage pulses are produced at an output by opening and closing electronic switches with the aid of switch position configurations, which are fetched from a memory by a microprocessor, characterized in that repeatedly and in desired order predetermined and stored combinations of switch position configurations and their associated number of fixed time steps (clocks) with unchanged switch positions are together fetched from the memory (22), a sequence of combinations forming a pulse pattern for at least one half-cycle of an approximated sinewave voltage and that numbers of fixed time steps are counted without changing the associated switch positions.

2. Method according to claim 1, characterized in that the duration and number of switch position configurations during a cycle are variable.

3. Method according to claim 2, characterized in that the duration and number of square-wave voltage pulses are variable as a function of the set output frequency.

4. Method according to one of the preceding claims, characterized in that switch position configurations and associated time step numbers are coded and fetched as 8-bit words (bytes).

5. Device for performing the method according to claim 1, with a microprocessor, a memory and electronic switches for inversion for regulating three-phase motors, square-wave voltage pulses being produced at an output by opening and closing the electronic switches with the aid of switch position configurations, which are fetched from the memory by the microprocessor, characterized by a counter (23) and by the fact that the microprocessor (21) can be used for fetching the switch position configuration and the number of the associated time steps from the memory (22) and for adjusting the configuration of the switches (3) and for setting the counter (23).

6. Device according to claim 5, characterized in that switch position configurations and associated time step numbers are stored on two successive memory locations of the memory (22).

7. Device according to claim 5, characterized in that switch position configurations and associated time step numbers are stored in the form of a word at a storage location of the memory (22).

8. Device according to one of the claims 5 to 7, characterized in that the memory (22) is an EPROM.

9. Device according to one of the claims 5 to 8, characterized in that on modifying the output frequency of the inverter (3) as a function thereof a specific order of different sequences of switch position configurations and associated time steps can be fetched by the microprocessor (21) from the memory (22).

**Revendications**

1. Procédé de changement de fréquence pour la régulation de moteurs à courant triphasé, des impulsions de tension rectangulaire étant générées à une sortie par l'ouverture et la fermeture de commutateurs électroniques à l'aide de configurations de positions de commutateurs qui sont appelées au moyen d'un microprocesseur dans une mémoire, **caractérisé en ce**

que, de manière répétée et dans un ordre désiré, des combinaisons prédéterminées et mémorisées de configurations de positions de commutateurs et leur nombre d'intervalles de temps fixes associés (cycles) de positions de commutateurs inchangées, sont appelées respectivement ensemble dans la mémoire (22), une succession de combinaisons formant un modèle d'impulsions pour au moins une demi-période d'une tension sinusoïdale approchée, et que les nombres d'intervalles de temps fixes sont comptés sans modification des positions de commutateurs associées.

2. Procédé selon la revendication 1, caractérisé en ce que la durée et le nombre des configurations de positions de commutateurs ne peuvent être modifiés pendant une période.

3. Procédé selon la revendication 2, caractérisé en ce que la durée et le nombre des impulsions de tension rectangulaire peuvent être modifiés en fonction de la fréquence initiale réglée.

4. Procédé selon l'une des revendications précédentes, caractérisé en ce que les configurations de positions de commutateurs et les nombres des intervalles de temps associés sont codés et appelés sous la forme de mots de 8 bits (octets).

5. Dispositif pour la mise en oeuvre du procédé selon la revendication 1, comprenant un microprocesseur, une mémoire et des commutateurs électroniques pour le changement de fréquence pour la régulation de moteurs à courant triphasé, des impulsions de tension rectangulaire étant générées à une sortie par l'ouverture et la fermeture des commutateurs électroniques a l'aide de configurations de positions de commutateurs lesquelles sont appelées au moyen d'un microprocesseur, **caractérisé en ce** qu'il comprend un compteur (23) et que le microprocesseur (21) peut être utilisé pour appeler dans la mémoire (22) les configurations de positions de commutateurs et le nombre des intervalles de temps associés, pour régler les configurations des commutateurs (3) et pour positionner le compteur (23).

6. Dispositif selon la revendication 5, caractérisé en ce que les configurations de positions de commutateurs et le nombre d'intervalles de temps associé sont stockés dans deux emplacements consécutifs de la mémoire (22).

7. Dispositif selon la revendication 5, caractérisé en ce que les configurations de positions de commutateurs et le nombre d'intervalles de temps associé sont stockés sous la forme d'un mot dans un emplacement de la mémoire (22).

8. Dispositif selon l'une des revendications 5 à 7, caractérisé en ce que la mémoire (22) est une EPROM.

9. Dispositif selon l'une des revendications 5 à 8, caractérisé en ce que, lors du changement de la fréquence initiale du changeur de fréquence (3), une succession déterminée de différentes séquences de configurations de positions de commutateurs et d'intervalles de temps associés peuvent être appelées par le microprocesseur (21) dans la mémoire (22) en fonction de ladite fréquence initiale.

EP 0 198 204 B1

Zeitpunkt $t_1$

FIG. 1a

Zeitpunkt $t_2$

FIG. 1b

9

FIG. 2

FIG. 3